(19)

Europäisches
Patentamt
European
Patent Office
Office européen
des brevets

(11) **EP 3 343 244 A1**

(12) **EUROPEAN PATENT APPLICATION**

(43) Date of publication:
04.07.2018 Bulletin 2018/27

(21) Application number: 16207474.4

(22) Date of filing: 30.12.2016

(51) Int Cl.:
$G01S\ 13/42^{(2006.01)}$     $G01S\ 13/46^{(2006.01)}$
$G01S\ 7/295^{(2006.01)}$     $G01S\ 13/18^{(2006.01)}$
$G01S\ 13/02^{(2006.01)}$     $G01S\ 13/87^{(2006.01)}$
$G01S\ 13/93^{(2006.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NXP B.V.**
**5656 AG Eindhoven (NL)**

(72) Inventor: **TONG, Ziqiang**
**Redhill, Surrey RH1 1QZ (GB)**

(74) Representative: **Terblanche, Candice Jane**
**NXP SEMICONDUCTORS**
**Intellectual Property Group**
**Abbey House**
**25 Clarendon Road**
**Redhill, Surrey RH1 1QZ (GB)**

(54) **RADAR SYSTEM**

(57)     The disclosure relates to a radar system, an example embodiment (300) including a first radar device (301) configured to detect a first angular position of an object (200) relative to the first radar device (301) and a second radar (302) device spatially offset from the first radar device (301) and configured to detect a second angular position of the object (200) relative to the second radar device (302). The system (300) further comprises a signal processor (307) configured to receive the first angular position and the second angular position of the object (200), and to determine a distance to the object (200) by combining the first angular position with the second angular position.

Fig. 3

EP 3 343 244 A1

**Description**

<u>Field</u>

The disclosure relates to a radar system for determining a distance to an object.

<u>Background</u>

Conventional radar determines the location of objects within a field of view by the reflection of radio waves from the object. The accuracy of a range measurement is limited by the bandwidth of the radar system. The minimum theoretical range resolution $\Delta R$ is given by:

$$\Delta R = \frac{c}{2 \cdot BW}$$

where c is the speed of light and *BW* is the bandwidth. For example, a bandwidth of 0.25 GHz yields a minimum range resolution of 60 cm, while a bandwidth of 1 GHz yields a minimum range resolution of 15 cm. Thus, to improve (i.e. reduce) the range resolution, the bandwidth of the radar device should be increased. However, the bandwidth available may be restricted by regulations. For example, the maximum bandwidth for millimetre wave (mmW) radar used in automotive applications is 5 GHz (76-81 GHz), setting a minimum range resolution of 3 cm. The bandwidth regulations therefore limit the range resolution of radar devices.

<u>Summary</u>

According to a first aspect of the disclosure there is provided a radar system comprising:

a first radar device configured to detect a first angular position of an object relative to the first radar device;
a second radar device spatially offset from the first radar device and configured to detect a second angular position of the object relative to the second radar device; and
a signal processor configured to receive the first angular position and the second angular position of the object, and to determine a position of the object by combining the first angular position with the second angular position.

Each of the first and second radar devices may comprise an RF transmitter and an RF receiver. The radar devices may for example be monostatic or bistatic radar devices.
Although the individual range resolution of each of the first and second radar devices may be limited by bandwidth regulations, the angular resolution of the devices is not. The angular resolution of the first and/or second radar devices instead depends upon the aperture of the antennae of the devices. The angular resolution of each radar device can therefore be improved by design.
The radar system combines the angular measurements of the first and second radar devices to determine a position of the object by determining a range of an object at a specific angle from each device. An improved angular resolution of the devices leads to an improved range resolution that is not dependent upon the bandwidth of the first or second radar devices.
A distance to the object may be measured relative to either the first or second radar devices, or to another point fixed relative to the first and second radar devices. In some embodiments, for example, the first and second devices may be positioned at opposite corners along the front edge of a vehicle, and the distance to the object may be determined based on a central point along the front of the vehicle.
In some embodiments the first angular position may comprise a first angular range and the second angular position may comprise a second angular range. The signal processor may be configured to determine a distance to the object by determining an area in which the first angular range and the second angular range overlap. In particular the first and second angular ranges may comprise the range of angular positions the object may have relative to the first and second radar devices respectively, due the angular resolution of the first and second radar devices.
In some embodiments, the first and/or second radar device may be further configured to determine a distance to the object. The signal processor may be configured to determine whether the distance calculated by combining the first angular position with the second angular position is more accurate than the distance determined by the first and/or second radar device. For example, the first and second radar devices may be operable in a conventional mode in which the range to the object is determined by time of flight. The signal processor may select which determined distance, i.e. the distance based on angular measurements or the conventionally determined distance, is a more accurate measurement.

The signal processor may be configured to determine that the distance calculated by combining the first angular position with the second angular position is more accurate if the distance is less than a predetermined value. The angular determined distance may be more accurate at smaller distances, for example distances of 2m or less, 10m or less, or 20m or less.

The predetermined value may be related to the bandwidth of the first and second radar devices. In particular, the predetermined value may be defined as the range of an object for which the maximum theoretical range resolution of the first or second radar device is greater than the resolution of the angular measurement. For example, the predetermined value may be in the range 2m-200m, or may in particular cases be 2m, 10m, or 20m.

In some embodiments the system may further comprise one or more additional radar devices configured to determine an angular position of the object relative to that radar device. For example the radar system may be a multistatic radar system. The signal processor may be configured to compare each determined angular position to determine a distance to the object. The signal processor may be further configured to determine a shape of the object by comparing each determined angular position, such as a 3D shape of the object.

According to a second aspect of the disclosure there is provided a vehicle comprising a radar system according to any embodiment of the first aspect.

According to a third aspect of the disclosure there is provided a method of determining a distance to an object, the method comprising:

receiving a first angular position of the object relative to a first radar device;
receiving a second angular position of the object relative to a second radar device; and
combining the first angular position with the second angular position to determine a location of the object.

In some embodiments the first angular position may comprise a first angular range and the second angular position comprises a second angular range, and the step of comparing the angular positions may comprise determining an area in which the first angular range and the second angular range overlap.

In some embodiments the method may further comprise:

receiving a distance to the object determined by the first radar device and/or the second radar device; and
determining whether the distance calculated by comparing the first angular position to the second angular position is more accurate than the distance determined by the first and/or second radar device.

In some embodiments, determining whether the distance is more accurate may comprise determining if the distance is less than a predetermined value.

According to a fourth aspect of the disclosure there is provided a computer program configured to perform the method of any embodiment of the third aspect.

When run on a computer, the computer program may cause the computer to configure any apparatus, including the radar devices disclosed herein, or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

Brief description of Drawings

Embodiments will be described, by way of example only, with reference to the drawings, in which

figure 1 illustrates schematically a conventional radar device;
figure 2 is a plot of half power bandwidth as a function of aperture size for an example radar device;
figure 3 is a schematic diagram of an example embodiment of a radar system;
figure 4 is a diagram illustrating the relative positions of the radar devices and the object in figure 3; and
figure 5 is a schematic flow diagram illustrating an example method of determining a distance to an object.

It should be noted that the Figures are diagrammatic and not drawn to scale. Relative dimensions and proportions of parts of these Figures have been shown exaggerated or reduced in size, for the sake of clarity and convenience in the drawings.

Detailed description of embodiments

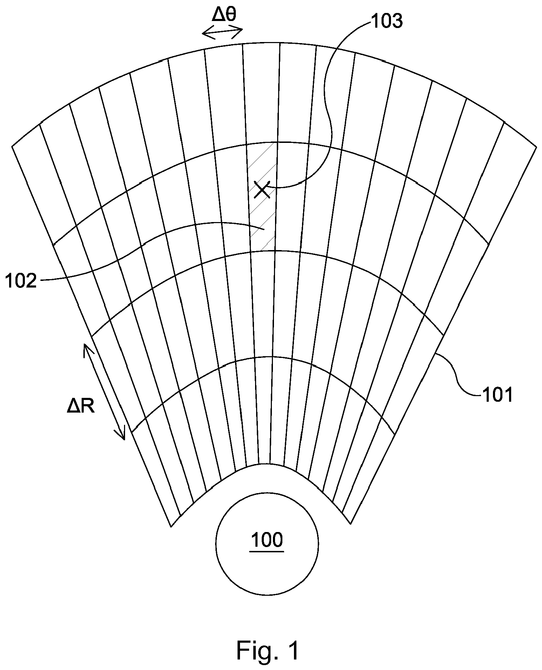

Figure 1 illustrates operation of a conventional radar device 100. The device 100 emits and detects radio waves within a field of view 101. The device 100 may comprise one or more antennae for transmitting and/or receiving the radio waves. The radio waves reflect off an object 103 within the field of view 101, enabling the object to be detected by the radar device 100.

The radar device 100 is able to determine a measure of the distance to the object 103 (i.e. the range of the object 103), and the angular position of the object 103 relative to the radar device 100. These measurements cannot be determined exactly, but are instead limited by the resolution of the radar device 100. The radar device 100 has a range resolution $\Delta R$ and an angular resolution $\Delta\theta$. Due to these limited resolutions, the position of an object 200 cannot be exactly determined. Instead, the radar device 100 is only able to determine that the object 103 is located within an area of space 102 defined by the range resolution $\Delta R$ and angular resolution $\Delta\theta$.

As described above, the range resolution $\Delta R$ is limited by the bandwidth of the radio waves emitted by the radar device 100. This bandwidth is in turn limited by regulation. The regulations thus limit the minimum range resolution of the radar device 100.

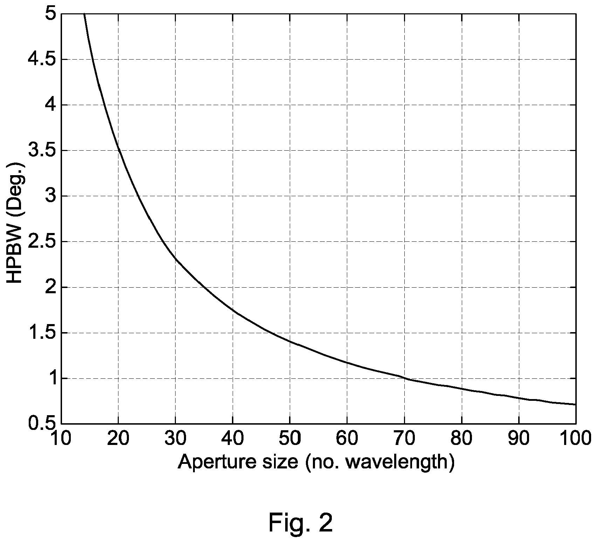

The bandwidth restrictions do not affect the angular resolution $\Delta\theta$. The angular resolution $\Delta\theta$ is instead primarily limited by the antenna aperture size of radar device 100. The angular resolution $\Delta\theta$ can therefore be reduced by appropriately designing the radar device 100, in particular by increasing the aperture size. Figure 2 shows an estimated comparison of antenna aperture size in multiples of the wavelength of the emitted waves to the half-power beam width (HPBW), which determines the angular resolution of the device. As can be seen from figure 2, a larger antenna aperture corresponds to a higher angular resolution. A high angular resolution is therefore feasible, even where the bandwidth is limited by regulation.

However, increasing the angular resolution $\Delta\theta$ of device 100 would not allow a more exact range measurement to be made, only more exact angular measurements.

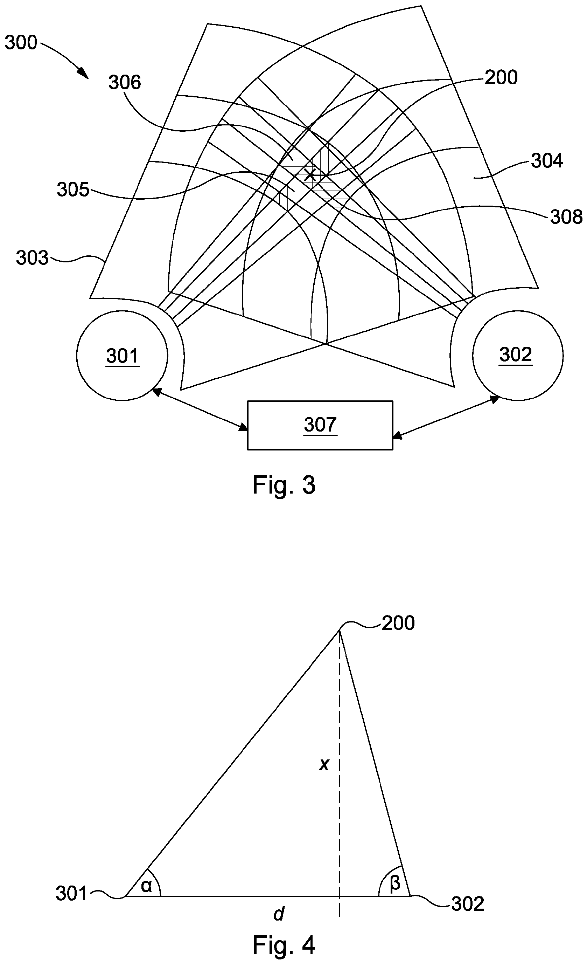

Figure 3 illustrates an example of a radar system 300 which can be used to determine a range measurement from angular measurements.

Radar system 300 comprises two radar devices: a first radar device 301 and a second radar device 302. Each radar device 301, 302 is individually similar to radar device 100, emitting and receiving radio waves within a respective field of view 303, 304. Each device 301, 302 has a range resolution and an angular resolution. Each device is configured to detect an object 200 within its field of view but, due to the limitations of resolution, can only determine an area 305, 306 within in which the object 200 may be located.

The first radar device 301 is spatially offset, or spatially separated, from the second radar device 302. The devices 301, 302 are arranged to have overlapping fields of view 303, 304. Thus, object 200 is located within the fields of view 303, 304 of both radar devices 301, 302, and can be simultaneously detected by both devices 301, 302. The spatial offset, or distance between, the radar devices 301, 302 may be over 100 times the wavelength of a frequency of operation of the devices 301, 302. In vehicle radar applications, the separation may for example be 30 cm or more, with the maximum separation being limited by the dimensions of the vehicle.

Radar system 300 further comprises a signal processor 307 in communication with both radar devices 301, 302. The signal processor 307 is configured to receive measurement data from both devices 301, 302, in particular angular measurements.

Radar system 300 may be used to determine a distance to the object 200. Each radar device 301, 302 determines an angular position of the object 200 relative to that device 301, 302. The resulting angular measurements are communicated to the signal processor 307. The signal processor compares the received angular measurements and, using the known positions of the radar devices 301, 302, is able to determine a distance to the object 200. The signal processor 307 may be provided in either or both of the radar devices 301, 302, or, as shown in figure 3, may be separate from both devices 301, 302.

With reference to figure 4, if the positions of each of the radar devices 301, 302 and the object 200 are shown as the corners of a triangle, the base of which has a length d that is the distance between the radar devices 301, 302, the perpendicular distance $x$ to the object 200, i.e. the shortest distance of the object 200 to a straight line connecting the positions of the radar devices 301, 302 can be calculated as:

$$x = d \frac{\tan\alpha \tan\beta}{\tan\alpha + \tan\beta}$$

where $\alpha$ and $\beta$ are the angles between straight lines connecting the object 200 with the first and second radar devices 301, 302 respectively and the line between the radar devices 301, 302.

Each of the angular measurements $\alpha$ and $\beta$ is limited by the angular resolution of the respective radar device 301, 302, so each measurement comprises a range of angles within which the object 200 may be located. The signal processor determines an area 308 of space in which the angular ranges from the two radar devices 301, 302 overlap. The object 200 is located within this area 308, allowing a distance to the object 200 to be determined.

As can be seen in figure 3, the area 308 is smaller than either areas 305 or 306. A more accurate measurement of the distance to the object 200 is therefore possible using the combined angular measurements than by taking a conventional range measurement with radar device 301 or 302.

The effective resolution of the range determined by angular comparison can be greater than the conventional range resolution of the devices 301, 302. For example, with $\Delta\theta = 0.5°$, the effective range resolution is 17.5cm for an object 20m away from the devices 301, 302. If this resolution was to be achieved by a conventional radar device, the bandwidth required would be 0.85GHz. For an object 10m away, effective resolution is 8.7cm, equivalent to a bandwidth of 1.72GHz. For an object 35cm away, the effective resolution is 0.3cm, equivalent to a bandwidth of 50GHz - a bandwidth far higher than is possible according to the regulations governing radar use.

As the above figures show, the effective range resolution of the distance determined by the angular comparison changes depending upon the distance of the object from the radar devices 301, 302. When the object 200 is close to the radar devices 301, 302, the effective range resolution is very high. On the other hand, the effective range resolution of the angular comparison is reduced at larger distances. This is because if the object 200 is further away the same angular range equates to a larger area of space at the object distance (i.e. area 308 is larger) than at small distances.

Table 1 below shows a comparison of the maximum range resolution possible for conventional radar devices to the effective range resolution of an exemplary radar system 300, for a variety of distances to the object 200. In table 1 the angular resolution of each radar device 301, 302 is taken to be 0.5°.

**Table 1 - Comparison of range resolutions**

| Radar type | Bandwidth | Range resolution | | | |
|---|---|---|---|---|---|
| | | 0.35m | 2m | 10m | 20m |
| Conventional device | 1GHz | 15cm | 15cm | 15cm | 15cm |
| | 4GHz | 3.75cm | 3.75cm | 3.75cm | 3.75cm |
| | 10GHz | 1.5cm | 1.5cm | 1.5cm | 1.5cm |
| Radar system 300 | Independent | 0.3cm | 1.7cm | 8.7cm | 17.5cm |

As Table 1 shows, if the bandwidth of the radar devices 301, 302 is 1GHz, the angular comparison measurement yields a better range resolution for distances to the object at 10m and below. If the bandwidth is 10 GHz, the angular comparison measurement yields a better range resolution only for smaller distances, less than 2m.

The radar devices 301, 302 may retain the ability to independently determine a range to an object using the conventional method. For large distances, this conventional measurement may be more exact than the angular comparison measurement. System processor 307 may therefore be able to determine which method is likely to yield a more accurate range measurement - the angular comparison or the conventional method. For example, both range measurement methods may be used to determine the possible range of an object. If either or both of the range measurements determines that the object is within a predetermined distance from the radar devices 301, 302, the conventional measurement may be discarded. If the distance is greater than the predetermined threshold, the angular comparison measurement may be discarded and a conventional range measurement used instead.

The radar system 300 may further comprise additional radar devices similar to devices 301, 302. The additional devices may be arranged with fields of view which overlap those of the devices 301, 302. The additional devices may be configured to provide angular measurements of objects to the signal processor 307. The signal processor 307 may combine angular data from all the devices to determine a distance to an object, which may increase further the effective resolution of the measurement. The additional devices may be used to determine further information about the object. For example, the devices 301, 302 and additional devices may be arranged to provide object detection outside of a two dimensional plane.

The radar devices 301, 302 may be RF front end, or RF front-end plus base band, or a combination of both.

The signal processor 307 may be remote from the radar devices 301, 302, or may be incorporated into one or both of the radar devices 301, 302. The signal processor 307 may comprise any computing device capable of receiving the angular measurement data and processing the data to determine a distance to the object 200.

The radar system 300 may be incorporated into a vehicle, such as a car, lorry or other ground transport vehicle, and may particularly be used for short-range applications. For example radar system 300 may be used in self-driving cars to detect objects around the vehicle. The radar system 300 may also be used for other applications such as gesture detection.

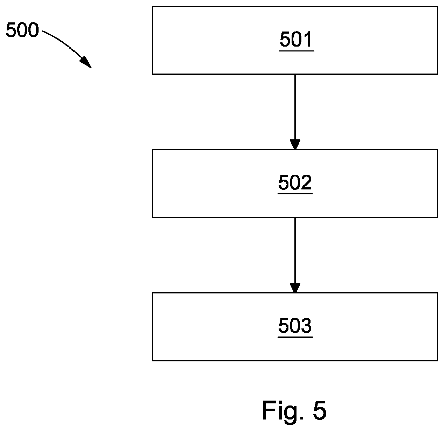

Figure 5 show an example method 500 of determining a distance to an object, such as object 200. In a first step 501, a first angular position of the object relative to a first radar device is received. In a second step 502, a second angular position of the object relative to a second radar device is received. In a third step 503, the first angular position is combined with the second angular position to determine a distance to the object, as described above in relation to radar system 300.

The method 500 may be implemented by a computer program. The signal processor 307 described above may comprise a computing device running such a computer program.

From reading the present disclosure, other variations and modifications will be apparent to the skilled person. Such variations and modifications may involve equivalent and other features which are already known in the art of radar devices and systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable subcombination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A radar system comprising:

   a first radar device configured to detect a first angular position of an object relative to the first radar device;
   a second radar device spatially offset from the first radar device and configured to detect a second angular position of the object relative to the second radar device; and
   a signal processor configured to receive the first angular position and the second angular position of the object, and to determine a distance to the object by combining the first angular position with the second angular position.

2. The system of claim 1, wherein the first angular position comprises a first angular range and the second angular position comprises a second angular range, and wherein the signal processor is configured to determine a distance to the object by determining an area in which the first angular range and the second angular range overlap.

3. The system of claims 1 or 2, wherein the first radar device and/or second radar device is further configured to determine a distance to the object, and wherein the signal processor is configured to determine whether the distance calculated by comparing the first angular position to the second angular position is more accurate than the distance determined by the first and/or second radar device.

4. The system of claim 3, wherein the signal processor is configured to determine that the distance calculated by comparing the first angular position to the second angular position is more accurate if the distance is less than a predetermined value.

5. The system of claim 4, wherein the predetermined value is related to the bandwidth of the first and second radar devices.

6. The system of any preceding claim, wherein the first and/or second radar device is a bistatic radar.

7. The system of any preceding claim, further comprising one or more additional radar devices configured to determine an angular position of the object relative to that radar device, and wherein the signal processor is configured to compare each determined angular position to determine a distance to the object.

8. The system of claim 7, wherein the signal processor is further configured to determine a shape of the object by comparing each determined angular position.

9. A vehicle comprising a radar system according to any of claims 1 to 8.

10. A method of determining a distance to an object, the method comprising:

receiving a first angular position of the object relative to a first radar device;
receiving a second angular position of the object relative to a second radar device; and
comparing the first angular position to the second angular position to determine a distance to the object.

11. The method of claim 10, wherein the first angular position comprises a first angular range and the second angular position comprises a second angular range, and wherein the step of comparing the angular positions comprises determining an area in which the first angular range and the second angular range overlap.

12. The method of claims 10 or 11, further comprising:

receiving a distance to the object determined by the first radar device and/or the second radar device; and determining whether the distance calculated by comparing the first angular position to the second angular position is more accurate than the distance determined by the first and/or second radar device.

13. The method of claim 12, wherein determining whether the distance is more accurate comprises determining if the distance is less than a predetermined value.

14. A computer program configured to perform the method of any of claims 10 to 13.

Fig. 1

Fig. 2

Fig. 3

Fig. 4

500

| 501 |
|:---:|

| 502 |
|:---:|

| 503 |
|:---:|

Fig. 5

Europäisches
Patentamt

European
Patent Office

Office européen
des brevets

# EUROPEAN SEARCH REPORT

Application Number

EP 16 20 7474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 038365 A1 (ADC AUTOMOTIVE DIST CONTROL [DE]) 7 January 2010 (2010-01-07) * paragraphs [0028], [0031] - [0037]; figures 1,2 * | 1-14 | INV. G01S13/42 G01S13/46 G01S7/295 G01S13/18 |
| X | DE 102 61 027 A1 (BOSCH GMBH ROBERT [DE]) 8 July 2004 (2004-07-08) * figures 1-5 * * paragraphs [0004], [0018] - [0024] * | 1-5, 8-11,14 | G01S13/02 G01S13/87 G01S13/93 |
| A | US 2016/187466 A1 (KIM SE YOON [KR]) 30 June 2016 (2016-06-30) * figures 1-3 * * paragraphs [0030] - [0040] * | 1-14 | |
| A | DE 10 2005 007917 A1 (VALEO SCHALTER & SENSOREN GMBH [DE]) 22 June 2006 (2006-06-22) * abstract; figures 2,8 * * paragraphs [0052] - [0065] * * paragraphs [0073] - [0075] * | 1-14 | |
| A | WO 03/019229 A2 (SIEMENS AG [DE]) 6 March 2003 (2003-03-06) * figures 3-5 * * page 4, line 25 - page 7, line 24 * | 1-14 | TECHNICAL FIELDS SEARCHED (IPC) G01S |

The present search report has been drawn up for all claims

| Place of search | Date of completion of the search | Examiner |
|---|---|---|
| Munich | 27 June 2017 | Unterberger, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 7474

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2017

| Patent document cited in search report | Publication date | Patent family member(s) | Publication date |
|---|---|---|---|
| DE 102008038365 A1 | 07-01-2010 | CN 102066970 A | 18-05-2011 |
| | | DE 102008038365 A1 | 07-01-2010 |
| | | DE 102009032114 A1 | 07-01-2010 |
| | | DE 102009032115 A1 | 07-01-2010 |
| | | DE 112009001041 A5 | 03-02-2011 |
| | | DE 112009001052 A5 | 27-01-2011 |
| | | DE 112009001064 A5 | 27-01-2011 |
| | | DE 112009001074 A5 | 03-02-2011 |
| | | DE 112009002141 A5 | 01-06-2011 |
| | | EP 2294445 A2 | 16-03-2011 |
| | | EP 2294446 A2 | 16-03-2011 |
| | | EP 2294450 A2 | 16-03-2011 |
| | | EP 2294451 A2 | 16-03-2011 |
| | | JP 2011526370 A | 06-10-2011 |
| | | JP 2011526371 A | 06-10-2011 |
| | | JP 2011526372 A | 06-10-2011 |
| | | JP 2011526373 A | 06-10-2011 |
| | | KR 20110040877 A | 20-04-2011 |
| | | US 2011074620 A1 | 31-03-2011 |
| | | US 2011074621 A1 | 31-03-2011 |
| | | US 2011080313 A1 | 07-04-2011 |
| | | US 2011080314 A1 | 07-04-2011 |
| | | WO 2010000216 A1 | 07-01-2010 |
| | | WO 2010000251 A2 | 07-01-2010 |
| | | WO 2010000252 A2 | 07-01-2010 |
| | | WO 2010000253 A2 | 07-01-2010 |
| | | WO 2010000254 A2 | 07-01-2010 |
| DE 10261027 A1 | 08-07-2004 | DE 10261027 A1 | 08-07-2004 |
| | | EP 1588190 A1 | 26-10-2005 |
| | | JP 2006512578 A | 13-04-2006 |
| | | US 2006164294 A1 | 27-07-2006 |
| | | WO 2004061475 A1 | 22-07-2004 |
| US 2016187466 A1 | 30-06-2016 | CN 105738877 A | 06-07-2016 |
| | | KR 20160081506 A | 08-07-2016 |
| | | US 2016187466 A1 | 30-06-2016 |
| DE 102005007917 A1 | 22-06-2006 | DE 102005007917 A1 | 22-06-2006 |
| | | WO 2006066781 A2 | 29-06-2006 |
| WO 03019229 A2 | 06-03-2003 | EP 1433002 A2 | 30-06-2004 |
| | | JP 4173809 B2 | 29-10-2008 |
| | | JP 2005500552 A | 06-01-2005 |
| | | KR 20040027947 A | 01-04-2004 |
| | | WO 03019229 A2 | 06-03-2003 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 16 20 7474

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2017

| Patent document cited in search report | Publication date | Patent family member(s) | Publication date |
|---|---|---|---|
| -------------------------------------------------------------------------------- | | | |

EPO FORM P0459

For more details about this annex : see Official Journal of the European Patent Office, No. 12/82

page 2 of 2